# FASCICULE DE BREVET EUROPEEN

(11) **EP 1 438 695 B1**
(45) Date de publication et mention de la délivrance du brevet: **06.04.2005**
(21) Numéro de dépôt: 02801932.1
(22) Date de dépôt: 17.10.2002
(51) Int. Cl.: G06K 19/07

(54) **CIRCUIT INTEGRE SANS CONTACT COMPRENANT DES MOYENS D'IDENTIFICATION AUTOMATIQUE DE TRAME**
KONTAKTFREIE INTEGRIERTE SCHALTUNG MIT AUTOMATISCHEN RAHMENIDENTIFIKATIONSMITTELN
CONTACT-FREE INTEGRATED CIRCUIT COMPRISING AUTOMATIC FRAME IDENTIFICATION MEANS

(30) Priorité: 23.10.2001 FR 0113773
(43) Date de publication de la demande: 21.07.2004
(73) Titulaire: Inside Contactless, 13856 Aix en Provence Cedex 3 (FR)
(72) Inventeur: ALLARD, Claire, F-38360 Sassenage (FR); MARTIN, Michel, F-13840 Rognes (FR); CHARRAT, Bruno, F-13090 Aix en Provence (FR)
(74) Mandataire: Marchand, André
(86) Numéro de dépôt international: PCT/FR2002/003562
(87) Numéro de publication internationale: WO 2003/036561

(56) Documents cités:
- WO-A-00/45328
- FR-A- 2 751 148

## Description

La présente invention concerne les circuits intégrés sans contact comprenant des moyens d'émission/réception de données par couplage inductif.

La présente invention concerne notamment mais non exclusivement les circuits intégrés sans contact prévus pour recevoir des données codées conformément à la norme ISO/IEC 15693 ou la norme ISO/IEC 14443-B.

Ces dernières années, les circuits intégrés sans contact ont connu un important développement et les méthodes de transmissions de données par couplage inductif, mises en oeuvre par de tels circuits intégrés, font aujourd'hui l'objet de divers protocoles, dont certains sont normalisés.

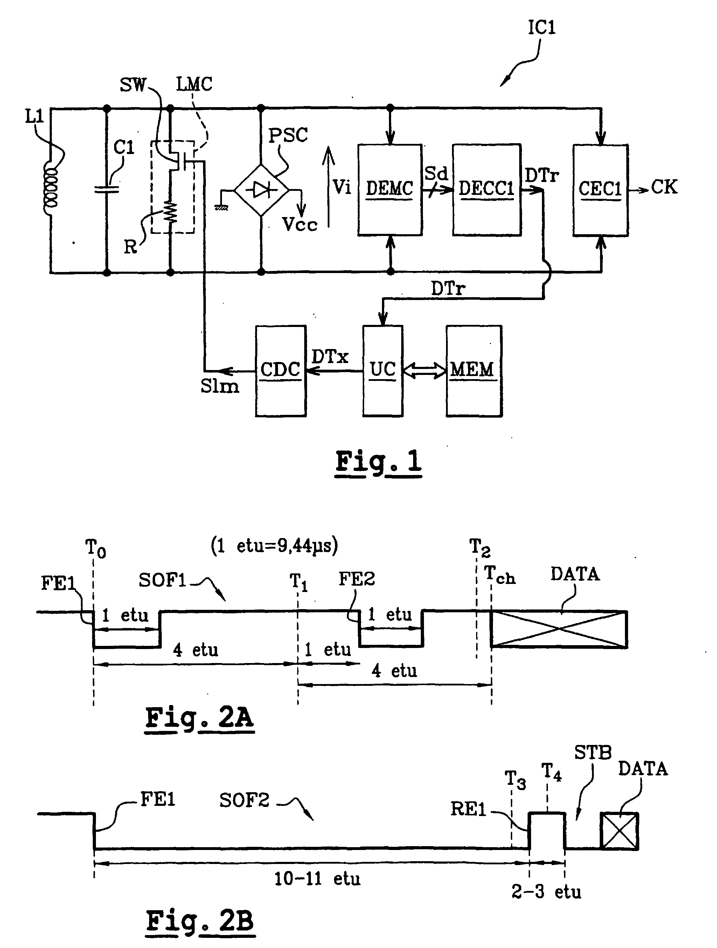

La figure 1 représente sous forme de blocs une architecture classique de circuit intégré sans contact IC1. Le circuit intégré IC1 comprend une bobine d'antenne L1 accompagnée d'un condensateur C1 en parallèle pour former un circuit d'antenne résonant, ces éléments pouvant être externes à la plaquette de silicium du circuit intégré, un circuit redresseur PSC et un circuit d'extraction d'horloge CEC1, tous deux connectés à la bobine L1.

Lorsque le circuit intégré se trouve plongé dans un champ magnétique oscillant émis par un lecteur de circuit intégré sans contact (non représenté), une tension alternative induite Vi apparaît aux bornés de la bobine L1. Le circuit PSC délivre, à partir de la tension induite Vi, une tension d'alimentation Vcc du circuit intégré, et le circuit CEC1 délivre le signal d'horloge CK du circuit intégré, dont la fréquence est généralement un sous-multiple de la porteuse du champ magnétique.

La réception de données par le circuit intégré IC1 est assuré par un circuit démodulateur DEMC connecté à la bobine L1, et par un circuit de décodage DECC1. Le circuit DEMC démodule la tension Vi par extraction de son enveloppe et suppression de la porteuse, et délivre un signal démodulé Sd contenant des données codées selon un protocole déterminé. Le signal Sd est appliqué à l'entrée du circuit de décodage DECC1 dont la sortie délivre des données binaires DTr. Les données DTr sont envoyées à l'organe central du circuit intégré, par exemple une unité centrale UC équipée d'une mémoire MEM.

L'émission de données par le circuit intégré est assurée par un circuit de codage CDC dont la sortie attaque un circuit de modulation de charge LMC connecté aux bornes de la bobine L1. Le circuit LMC comprend par exemple un interrupteur SW en série avec une résistance R. Des données à transmettre DTx, délivrées par l'unité centrale ou lues directement dans la mémoire MEM, sont appliquées au circuit de codage CDC, dont la sortie délivre un signal de modulation de charge Slm codé selon un protocole déterminé, appliqué sur l'entrée de commande de l'interrupteur SW (par exemple la grille d'un transistor). Chaque fermeture de l'interrupteur SW provoque un court-circuit d'antenne entraînant un affaiblissement du champ magnétique ambiant, qui est détecté par le lecteur de circuit intégré sans contact et permet à ce dernier de décoder les données envoyées par le circuit intégré IC1.

Comme on l'a indiqué ci-dessus, les circuits intégrés sans contact font l'objet de divers protocoles, qui définissent les caractéristiques des signaux intervenant dans une communication, ainsi que le codage des données. Les différences structurelles entre deux circuits intégrés sans contact prévus pour répondre à deux protocoles différents interviennent essentiellement au niveau du circuit de décodage DECC1 et du circuit de codage CDC représentés sur la figure 1.

A titre d'exemple, la norme ISO/IEC 15693 prévoit un codage par modulation de position d'impulsion des données envoyées à un circuit intégré sans contact, et un début de trame SOF1 dont le profil est représenté en figure 2A, tandis que la norme ISO/IEC 14443-B prévoit un codage NRZ des données envoyées à un circuit intégré sans contact, et un début de trame SOF2 dont le profil est représenté en figure 2B.

En pratique, la prévision de ces divers protocoles est justifiée par des raisons techniques, chaque protocole étant prévu pour l'obtention de performances déterminées dans une catégorie déterminée d'applications. Ainsi par exemple, le protocole ISO/IEC 15693 convient aux applications nécessitant une distance de communication assez élevée et un débit de données assez faible, tandis que le protocole ISO/IEC 14443-B convient aux applications nécessitant une faible distance de communication et un débit de données plus élevé.

A chaque protocole correspond un type de circuit intégré sans contact bien défini, qui se distingue notamment des autres circuits intégrés sans contact par ses circuits de codage et de décodage, le circuit de décodage comprenant notamment des moyens de reconnaissance d'un début de trame tel que prévu par le protocole.

Le document WO 00/45328 décrit en relation avec sa figure 1 un circuit intégré sans contact comprenant deux blocs de décodage 12, 13 prévu pour décoder respectivement des données codées RTZ (retour à zéro) et des données codées MI (codage Miller). Lorsque des données sont reçues par le circuit intégré, la discrimination du mode de codage utilisé pour coder ces données est assurée par les blocs de décodage eux-mêmes. Plus précisément, chaque bloc de décodage vérifié la validité des données qu'il décode selon son propre protocole, en comparant le code CRC qui accompagne les données à un code CRC calculé à partir des données décodées. Les blocs de décodage 12, 13 émettent chacun un signal "de support de décision" EUI1, EUI2, qui indique si les données reçues sont valides ou non (elles sont donc valides lorsque le code CRC calculé est identique au code CRC reçu). Les signaux EUI1, EUI2 sont envoyés à un circuit de décision 14, qui envoie une "information de décision" E1 à un circuit de traitement de données 11, lequel est ainsi en mesure de savoir quelles sont les données décodées D1, D2 qui sont valables, celles (D1) fournies par le premier circuit de décodage ou celles (D2) fournies par le second circuit de décodage. Ces données D1, D2 décodées par chacun des blocs RTZ, MI sont stockées en parallèle dans un circuit tampon 15.

La présente invention repose sur la constatation selon laquelle la multiplication des protocoles complique la fabrication des circuits intégrés sans contact et conduit à une diversification des modèles de circuits intégrés proposés à la clientèle industrielle, laquelle approvisionne des circuits intégrés sans contact pour réaliser des badges électroniques, des cartes à puce sans contact ou autres objets électroniques portatifs sans contact.

La présente invention repose également sur la constatation selon laquelle, dans une même application, tel protocole peut s'avérer parfois meilleur que tel autre protocole, ou réciproquement, en fonction des conditions de fonctionnement du circuit intégré. Ainsi, par exemple, on peut souhaiter qu'un badge électronique équipé d'un circuit intégré sans contact présente dans certains cas un débit de données élevé au détriment de la distance de communication, et dans d'autres cas une distance de communication élevée au détriment du débit de données.

Ainsi, une première idée de la présente invention est de prévoir un circuit intégré sans contact "multiprotocole" et de type "configurable", c'est-à-dire capable d'assurer une communication selon au moins deux protocoles différents selon la configuration qui lui est appliquée.

Toutefois, la prévision d'un circuit intégré "configurable" implique que le circuit intégré doit être configuré avant sa mise en service, afin de déterminer son mode de fonctionnement. Or, une telle étape de configuration implique une opération de manutention supplémentaire et n'est donc pas souhaitable. En outre, comme on l'a indiqué plus haut, un premier protocole peut s'avérer parfois meilleur qu'un deuxième protocole ou réciproquement selon les conditions de fonctionnement du circuit intégré au sein d'une même application.

Ainsi, un objectif de la présente invention est de prévoir un circuit intégré sans contact qui permette de réduire le nombre de modèles proposés à la clientèle industrielle tout en étant d'un emploi facile.

Cet objectif est atteint par l'invention comme definie dans la revendication 1.

Selon un mode de réalisation, le circuit intégré comprend une première unité de décodage pour décoder des données codées selon un premier protocole, au moins une seconde unité de décodage pour décoder des données codées selon au moins un second protocole, et des moyens de sélection de la première ou de la seconde unité de décodage en fonction du profil d'un début de trame reçu au commencement d'une communication.

Selon un mode de réalisation, le circuit intégré comprend des moyens de détection d'un début de trame d'un premier type correspondant au premier protocole, agencés pour délivrer un premier signal de détection de début de trame lorsqu'un début de trame du premier type est détecté, et des moyens de détection d'un début de trame d'un second type correspondant au second protocole, agencés pour délivrer un second signal de détection de début de trame lorsqu'un début de trame du second type est détecté.

Selon un mode de réalisation, les moyens de détection d'un début de trame du premier type sont agencés pour détecter un premier front de variation du signal reçu par couplage inductif, puis détecter dans une première fenêtre temporelle un second front de variation du signal reçu par couplage inductif, et les moyens de détection d'un début de trame du second type sont agencés pour détecter un premier front de variation du signal reçu par couplage inductif, puis détecter dans une seconde fenêtre temporelle un second front de variation du signal reçu par couplage inductif.

Selon un mode de réalisation, les moyens de détection d'un début de trame du premier type sont agencés pour détecter deux fronts de variation d'un même type, et les moyens de détection d'un début de trame du second type sont agencés pour détecter un front de variation d'un premier type et un front de variation d'un second type inverse du premier type.

Selon un mode de réalisation, le circuit intégré comprend des moyens pour inhiber les moyens de détection d'un début de trame du premier type, lorsqu'un temps déterminé se situant entre la première et la seconde fenêtres temporelles s'est écoulé après apparition d'un premier front de variation du signal reçu par couplage inductif.

Selon un mode de réalisation, le circuit intégré comprend des moyens pour inhiber les moyens de détection d'un début de trame du second type lorsqu'un début de trame du premier type est détecté.

Selon un mode de réalisation, le circuit intégré comprend un circuit d'identification de début de trame commun aux première et seconde unités de décodage, dans lequel sont agencés les moyens de détection d'un début de trame du premier type et les moyens de détection d'un début de trame du second type.

Selon un mode de réalisation, la première unité de décodage comprend les moyens pour détecter un début de trame du premier type, et la seconde unité de décodage comprend les moyens pour détecter un début de trame d'un second type.

Selon un mode de réalisation, les moyens de sélection comprennent des moyens de désactivation de la seconde unité de décodage ou de désactivation de la première unité de décodage.

Selon un mode de réalisation, les moyens de sélection comprennent un moyen de multiplexage des sorties des unités de décodage.

Selon un mode de réalisation, le moyen de multiplexage est agencé pour sélectionner par défaut la sortie de la première unité de décodage et pour sélectionner la sortie de la seconde unité de décodage lorsqu'un début de trame correspondant au protocole de la deuxième unité de décodage est reçu.

Selon un mode de réalisation, le moyen de multiplexage comprend une entrée de sélection pilotée par un signal de détection de début de trame.

Selon un mode de réalisation, le circuit intégré comprend un circuit extracteur d'horloge agencé pour délivrer un premier signal d'horloge de fréquence déterminée lorsque le circuit intégré est dans un mode de communication conforme à un premier protocole, et délivrer un second signal d'horloge d'une fréquence différente de celle du premier signal d'horloge, lorsque le circuit intégré est dans un mode de communication conforme à un second protocole.

Selon un mode de réalisation, le circuit intégré comprend des moyens de communication selon au moins le protocole ISO/IEC 15693 et le protocole ISO/IEC 14443-B, et des moyens pour basculer automatiquement dans un mode de communication conforme à l'un ou l'autre de ces protocoles en fonction du profil d'un début de trame reçu au commencement d'une communication.

Ces objets, caractéristiques et avantages ainsi que d'autres de la présente invention seront exposés plus en détail dans la description suivante d'un exemple de réalisation d'un circuit intégré selon l'invention, et de variantes de réalisation de ce circuit intégré, faite à titre non limitatif en relation avec les figures jointes parmi lesquelles :
- la figure 1 précédemment décrite est le schéma-bloc d'un circuit intégré sans contact classique,
- les figures 2A, 2B représentent deux profils de début de trame classiques,
- la figure 3 est le schéma-bloc d'un circuit intégré sans contact selon l'invention,
- la figure 4 est le schéma logique d'un circuit d'identification de début de trame selon l'invention, représenté sous forme de blocs en figure 3,
- la figure 5A représente un profil de début de trame conforme à celui représenté en figure 2A,
- les figures 5B à 5F représentent divers signaux logiques apparaissant dans le circuit représenté en figure 4 lors de la réception du début de trame représenté en figure 5A,
- la figure 6A représente un profil de début de trame conforme à celui représenté en figure 2B,
- les figures 6B à 6H représentent divers signaux logiques apparaissant dans le circuit représenté en figure 4 lors de la réception du début de trame représenté en figure 6A, et
- la figure 7 illustre une variante de réalisation de certains éléments du circuit intégré sans contact de la figure 3.

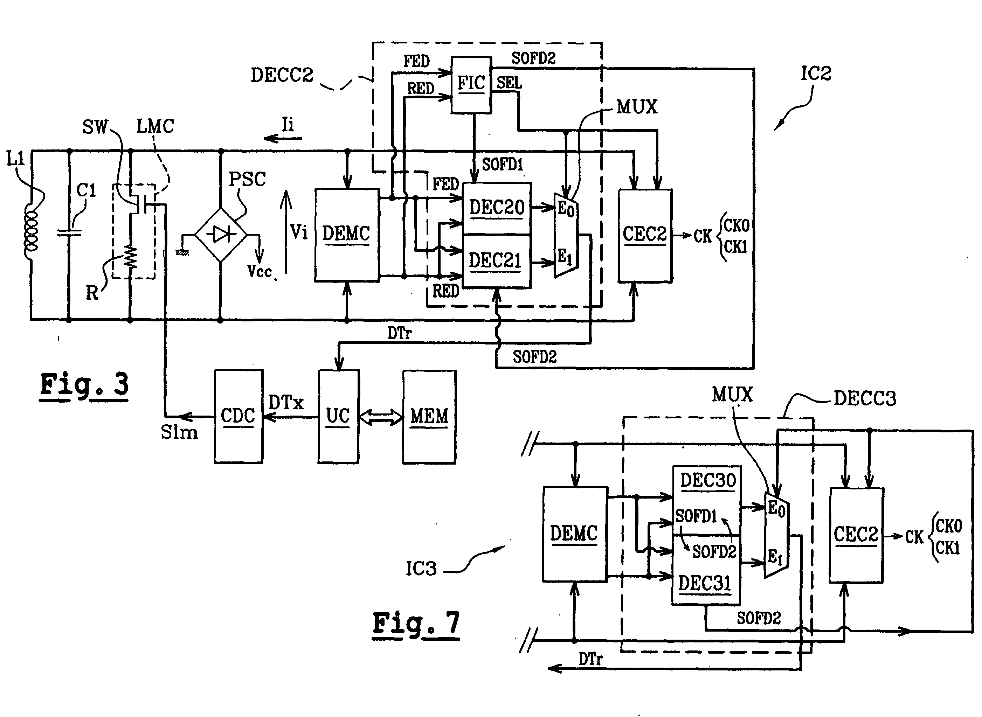

La figure 3 représente sous forme de blocs un circuit intégré sans contact IC2 selon l'invention. Le circuit intégré IC2 présente une architecture générale en soi classique et comprend un circuit d'antenne comportant une bobine L1 et un condensateur C1, un circuit redresseur PSC connecté aux bornes de la bobine et délivrant une tension d'alimentation Vcc, un circuit d'extraction d'horloge CEC2 connecté aux bornes de la bobine et délivrant un signal d'horloge CK. Un circuit démodulateur DEMC connecté aux bornes de la bobine L1 délivre un signal démodulé formé par deux signaux FED, RED. Ces signaux sont appliqués à un circuit de décodage DECC2, dont la sortie délivre des données DTr reçues par couplage inductif. Les données DTr sont appliquées à un organe central du circuit intégré, comprenant par exemple une unité centrale UC à logique câblée ou à microprocesseur, et une mémoire MEM. Enfin, un circuit de codage CDC relié à l'unité centrale UC reçoit des données DTx à émettre, et délivre un signal de modulation de charge Slm à un circuit de modulation de charge LMC qui est connecté aux bornes de la bobine L1.

Le circuit DEMC est de type classique et assure une démodulation d'une tension induite Vi apparaissant aux bornes de la bobine L1 en présence d'un champ magnétique oscillant émis par un lecteur de circuit intégré sans contact. Cette tension Vi présente une oscillation primaire correspondant à la porteuse du champ magnétique (généralement 13,56 MHz) et présente également, lorsque des données sont envoyées par le lecteur, une modulation d'amplitude (ou modulation d'enveloppe) qui est l'image de la modulation d'amplitude appliquée par le lecteur au champ magnétique ambiant, et qui est détectée par le circuit DEMC. Il est également possible de procéder à une démodulation d'un courant induit Ii traversant la bobine L1, au lieu d'une démodulation de la tension Vi.

Le signal FED délivré par le circuit DEMC est un signal de détection de front descendant qui présente ici une impulsion à 1 lorsqu'un front descendant de modulation d'amplitude apparaît dans le champ magnétique ambiant. Le signal RED est un signal de détection de front montant qui présente ici une impulsion à 1 lorsqu'un front montant de modulation d'amplitude apparaît dans le champ magnétique ambiant. Les impulsions délivrées par le circuit DEMC sont par exemple d'une durée de 1 etu, un etu étant une unité élémentaire de temps ("elementary time unit") valant 9,44 µs.

Le circuit intégré IC2 se distingue d'un circuit intégré classique en ce que le circuit de décodage DECC2 est un circuit de décodage "biprotocole" comprenant deux unités de décodage distinctes DEC20 et DEC21, recevant chacune en entrée les signaux FED et RED. L'unité DEC20 est prévue pour le décodage de données codées conformément à un premier protocole, et l'unité DEC21 est prévue pour le décodage de données codées conformément à un second protocole. Les sorties des unités de décodage DEC20, DEC21 sont appliquées respectivement sur les entrées E0 et E1 d'un multiplexeur MUX, dont la sortie forme la sortie de circuit de décodage DECC2.

Selon l'invention, le circuit de décodage DECC2 est agencé pour identifier automatiquement le protocole utilisé au début d'une communication, et pour sélectionner l'unité de décodage DEC20 ou DEC21 convenant au protocole identifié. Selon l'invention toujours, l'identification du protocole est assurée par une analyse du profil d'un début de trame (SOF) reçu au commencement d'une communication.

Dans le mode de réalisation représenté en figure 3, l'identification automatique de protocole est assurée par un circuit d'identification de début de trame FIC selon l'invention, présent dans le circuit de décodage DECC2. Le circuit FIC reçoit en entrée les signaux FED et RED et délivre des signaux SOFD1, SOFD2 et SEL. Le signal SOFD1 est un signal de détection de début de trame selon le premier protocole et est appliqué à l'unité de décodage DEC20. Le signal SOFD2 est un signal de détection de début de trame selon le second protocole et est appliqué à l'unité de décodage DEC21. Le signal SEL est appliqué sur l'entrée de sélection du multiplexeur MUX, et sa valeur détermine l'entrée E0 ou E1 qui est sélectionnée à la sortie du multiplexeur.

Dans ce qui suit, on décrira un exemple de réalisation du circuit FIC en relation avec les protocoles normalisés ISO/IEC 15693 et ISO/IEC 14443-B, auxquels on se réfère ici à titre d'exemple non limitatif de mise en oeuvre de la présente invention.

Dans le cadre d'une telle mise en oeuvre de l'invention, l'unité DEC20 assure le décodage de données codées conformément au protocole ISO/IEC 15693 et l'unité DEC21 assure le décodage de données codées conformément au protocole ISO/IEC 14443-B. Dans un souci de simplicité, on ne décrira pas l'architecture des unités de décodage DEC20, DEC21, qui est en soi classique et à la portée de l'homme de l'art. Pour mémoire, le codage de données selon ISO/IEC 15693 est un codage par paires de bits par position d'impulsion, une impulsion étant formée par des trous de champ d'une durée de 1 etu pouvant occuper quatre positions dans des segments temporels de 8 etu. Ce protocole offre un débit de données assez faible de l'ordre de 26 k bit/s mais une distance de communication assez élevée de l'ordre de 40 à 50 cm. D'autre part, le codage de données codées conformément au protocole ISO/IEC 14443-B est un codage bit par bit de type NRZ, offrant un débit de donnée plus élevé de l'ordre de 106 kbit/s et une distance de communication plus faible de l'ordre de 20 à 25 cm.

Le profil de début de trame SOF1 selon le protocole ISO/IEC 15693, représenté en figure 2A, présente deux trous de champ d'une largeur de 1 etu compris chacun dans un demi-segment temporel de 4 etu. Le début de trame SOF1 est ainsi d'une durée de 8 etu et est suivi de données DATA codées par paire. Il présente deux fronts descendants FE1, FE2 correspondant aux deux trous de champ, signalés par des impulsions du signal FED délivré par le démodulateur DEMC. Le premier front descendant FE1 est le point de départ du début de trame SOF1 et s'inscrit dans le premier demi-segment temporel. Le second front descendant FE2 s'inscrit dans le second demi-segment temporel et apparaît 1 etu après le commencement du second demi-segment.

Ainsi, la détection du début de trame SOF1 par le circuit FIC comprend ici la détection du premier front descendant FE1, puis la détection du second front descendant FE2 dans une fenêtre temporelle délimitée par des temps T1 et T2 calculés à compter du premier front descendant FE1. Le temps T1 est par exemple égal à 4 etu, soit le commencement du second demi-segment temporel, et le temps T2 égal à 7 etu, soit 3 etu après le commencement du second demi-segment temporel.

Le profil de début de trame SOF2 prévu par le protocole ISO/IEC 14443-B, représenté en figure 2B, présente un seul trou de champ d'une durée de 10 à 11 etu. Ce trou de champ est suivi d'un palier sans modulation d'amplitude d'une durée de 2 à 3 etu. Le début de trame SOF2 est ainsi d'une durée de 12 à 14 etu et est suivi d'un bit de start STB puis de données DATA codées NRZ. Il présente un front descendant FE1 apparaissant au commencement du trou de champ et un front montant RE1 correspondant à la fin du trou de champ, le front descendant FE1 étant signalé par une impulsion du signal FED et le front montant RE1 signalé par une impulsion du signal RED.

Ainsi, la détection du début de trame SOF2 par le circuit FIC comprend ici la détection du front descendant FE1 et la détection du front montant RE1 dans une fenêtre temporelle délimitée par des temps T3 et T4 calculés à compter du front descendant FE1, T3 et T4 étant supérieurs à T2. Le temps T3 est par exemple égal à 10 etu et le temps T4 égal à 13 etu.

Il est clair qu'en pratique, le choix de T1, T2, T3 et T4 n'est pas figé et dépend du degré de tolérance que l'on souhaite conférer au circuit d'identification de début de trame FIC.

Selon un aspect de l'invention, on définit également un temps de transition Tch calculé à compter du front descendant FE1, qui correspond à la durée totale du début de trame SOF1. Le temps Tch est ainsi compris entre T2 et T3 et est par exemple égal à 8 etu. Lorsque le temps Tch est atteint et qu'un début de trame SOF1 n'a pas été détecté, le circuit FIC cherche uniquement à détecter un début de trame SOF2, comme on le verra ci-après à la lumière d'un exemple de réalisation du circuit FIC.

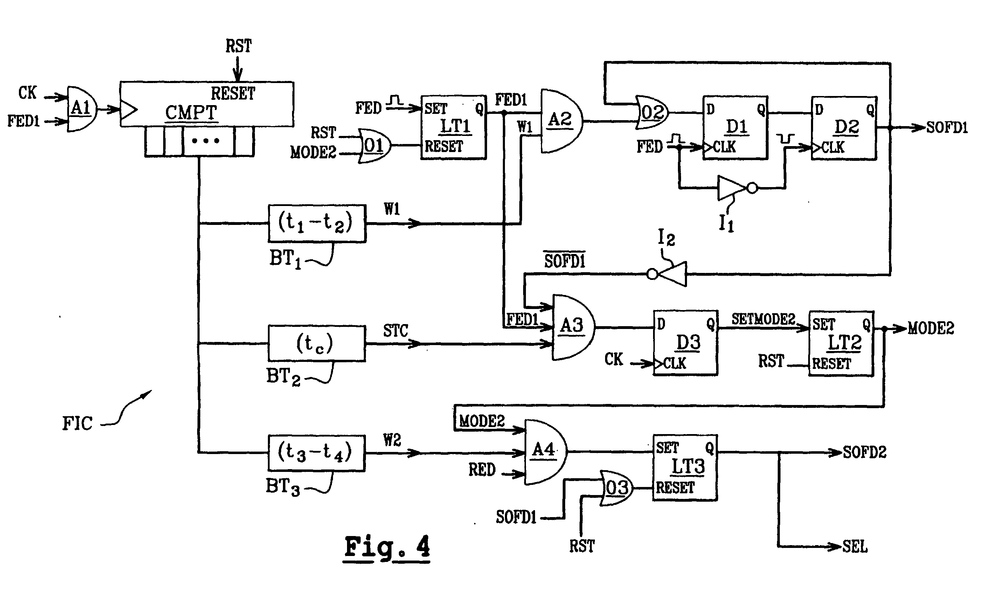

La figure 4 est le schéma logique d'un mode de réalisation du circuit FIC, réalisé exclusivement en logique câblée d'une manière simple et peu encombrante en termes de surface de silicium occupée, et conçu pour l'identification automatique des débuts de trames SOF1 et SOF2 selon le procédé qui vient d'être décrit. Le circuit FIC comprend un compteur CMPT et trois circuits de décodage BT1, BT2, BT3 assurant la détection des temps T1, T2, Tch, T3, T4 à partir d'une valeur de comptage délivrée par le compteur. Le compteur CMPT reçoit sur son entrée de comptage, par l'intermédiaire d'une porte A1 de type ET, le signal d'horloge CK délivré par le circuit CEC1 (fig. 3). L'entrée RESET du compteur CMPT reçoit un signal RST de remise à zéro générale appliqué à divers autres éléments du circuit FIC. Les circuits BT1, BT2, BT3 sont connectés à la sortie du compteur CMPT et délivrent respectivement des signaux W1, STC, W2. Le signal W1 est mis à 1 par le circuit BT1 lorsque la sortie du compteur est comprise entre deux valeurs "VAL1" et "VAL2" correspondant respectivement aux temps T1 et T2. Le signal STC est mis à 1 par le circuit BT2 lorsque la sortie du compteur est égale à une valeur "VALC" correspondant au temps Tch. Le signal W2 est mis à 1 par le circuit BT3 lorsque la sortie du compteur est comprise entre deux valeurs "VAL3" et "VAL4" correspondant respectivement aux temps T3, T4.

Le circuit FIC représenté en figure 4 comprend également deux verrous LT1, LT2, LT3 présentant chacun des entrées SET, RESET et une sortie Q, trois bascules D synchrones D1, D2, D3 présentant chacune une entrée D, une entrée de déclenchement CLK et une sortie Q, des portes A2, A3, A4 de type ET, des portes O1, 02, 03 de type OU, et des portes inverseuses I1, I2.

Le verrou LT1 reçoit sur son entrée SET le signal FED délivré par le démodulateur DEMC (fig. 3) et reçoit sur son entrée RESET la sortie de la porte O1, laquelle reçoit en entrée le signal RST et un signal MODE2. La sortie Q du verrou LT1 délivre un signal FED1 qui est appliqué sur une deuxième entrée de la porte A1 ainsi que sur une entrée de la porte A2 et sur une entrée de la porte A3. La porte A2 reçoit sur une deuxième entrée le signal W1 et sa sortie est connectée à une entrée de la porte 02 dont la sortie est appliquée sur l'entrée D de la bascule D1. La bascule D1 reçoit sur son entrée CLK le signal FED et sa sortie Q est appliquée sur l'entrée D de la bascule D2. La bascule D2 reçoit sur son entrée CLK le signal FED inversé, délivré par la porte I1, et délivre sur la sortie Q le signal SOFD1, qui est renvoyé sur une deuxième entrée de la porte O2.

La porte A3 reçoit sur une deuxième entrée le signal STC et sur une troisième entrée le signal SOFD1 inversé, délivré par la porte I2. La sortie de la porte A3 est appliquée sur l'entrée D de la bascule D3 dont l'entrée CLK reçoit le signal d'horloge CK et dont la sortie Q délivre un signal SETMODE2. Le signal SETMODE2 est appliqué sur l'entrée SET du verrou LT2 dont l'entrée RESET reçoit le signal RST et dont la sortie Q délivre le signal MODE2.

Le signal MODE2 est appliqué sur une entrée de la porte A4, laquelle reçoit sur une deuxième entrée le signal W2 et sur une troisième entrée le signal RED délivré par le démodulateur DEMC (fig. 3). La sortie de la porte A4 est appliquée sur l'entrée SET du verrou LT3 dont l'entrée RESET reçoit la sortie de la porte 03. Cette dernière reçoit sur ses entrées le signal RST et le signal SOFD1. La sortie Q du verrou LT3 délivre les signaux SOFD2 et SEL, qui sont ici identiques.

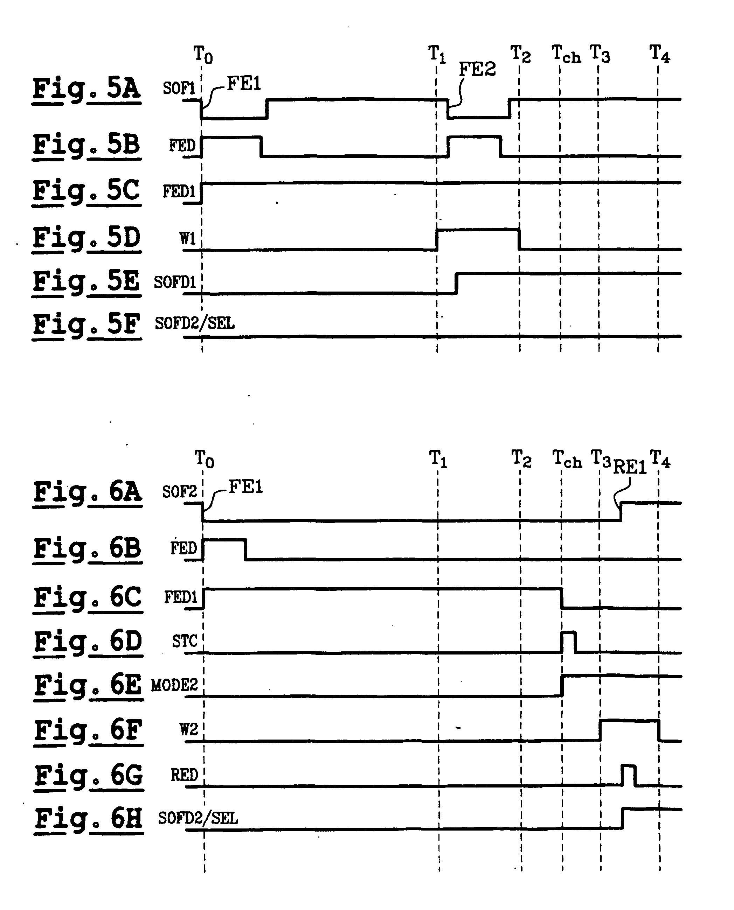

Le fonctionnement du circuit FIC lors de la réception d'un début de trame SOF1 est illustré sur les figures 5A à 5C, qui représentent respectivement le profil du début de trame SOF1 et les signaux FED, FED1, W1, SOFD1, SOFD2/SEL. A un instant T0, et après remise à zéro de l'ensemble du circuit FIC au moyen du signal RST, un premier trou de champ apparaît (fig. 5A). Le signal FED présente une impulsion à 1 (fig. 5B) qui fait passer à 1 le signal FED1 (fig. 5C) à la sortie du verrou LT1. Lorsque le temps T1 est atteint et que le compteur se trouve dans une plage de comptage correspondant à l'intervalle T1-T2, le signal W1 passe à 1 (fig. 5D), la sortie de la porte A2 passe à 1 et l'entrée D de la bascule D1 est mise à 1. Lorsque le deuxième trou de champ apparaît dans l'intervalle T1-T2, le signal FED présente à nouveau une impulsion à 1 (fig. 5B). La sortie Q de la bascule D1 passe à 1 sur front montant de l'impulsion FED et la sortie Q de la bascule D2 passe à 1 sur front descendant de l'impulsion FED (signal SOFD1, fig. 5E). Le passage à 1 du signal SOFD1 inhibe la porte A3, de sorte que le reste du circuit FIC reste bloqué. Le signal SOFD2 ne donc peut plus passer à 1 et reste égal à 0 (fig. 5F).

Le fonctionnement du circuit FIC lors de la réception d'un début de trame SOF2 est illustré sur les figures 6A à 6H, qui représentent respectivement le profil du début de trame SOF2 et les signaux FED, FED1, STC, MODE2, W2, RED, SOFD2/SEL. A l'instant T0, un premier trou de champ apparaît (fig. 6A) et le signal FED présente une impulsion à 1 (fig. 6B) qui fait passer à 1 le signal FED1 (fig. 6C) à la sortie du verrou LT1. Lorsque le temps Tch est atteint, le signal STC passe à 1 en sortie du circuit BT2 (fig. 6D). La sortie de la porte A3 passe à 1, la sortie de la bascule D3 passe à 1 (signal SETMODE2) et le signal MODE2 passe à 1 (fig. 6E). Le passage à 1 du signal MODE2 remet à zéro le verrou LT1 de sorte que le signal FED1 repasse à 0 (fig. 6C), ce qui inhibe la partie du circuit FIC affectée à la détection du début de trame SOF1, cette partie comprenant les portes A1 et les bascules D1, D2. Ainsi, le signal SOFD1 reste à 0 en sortie de la bascule D2.

Lorsque le temps T3 est atteint et que le compteur se trouve dans une plage de comptage correspondant à l'intervalle T3-T4, le signal W2 passe à 1 (fig. 6F). A la fin du trou de champ, un front montant apparaît dans l'enveloppe du champ magnétique (fig. 6A) entre les instants T3, T4 et le signal RED présente une impulsion à 1 (fig. 6G), le signal W2 en sortie du circuit BT3 étant toujours à 1. Le signal MODE2 étant maintenu à 1 (fig. 6E) par le verrou LT2, la sortie de la porte A4 passe à 1 et le signal SOFD2/SEL en sortie du verrou LT3 passe également à 1 (fig. 6H).

En résumé, après détection du premier front descendant FE1, le signal SOFD1 passe à 1 si et seulement si le deuxième front descendant FE2 est détecté entre les instants T1 et T2, ou le signal SOFD2 passe à 1 si et seulement si un front montant RE1 est détecté entre les instants T3 et T4. De plus, le signal SOFD2 est verrouillé à 0 quand le signal SOFD1 passe à 1 et le signal SOFD1 est verrouillé à 0 à partir de l'instant Tch, quand le signal MODE2 passe à 1. Le passage à 1 du signal MODE2 signale que le circuit intégré est susceptible de basculer dans un mode de fonctionnement correspondant à une communication conforme au protocole ISO/IEC 14443-B, ce mode de fonctionnement n'étant validé et confirmé qu'à compter de l'instant où le signal SOFD2 passe à 1.

Les trous de champ selon la norme ISO/IEC 15693 correspondant à une modulation à 10% ou à 100% de l'amplitude du champ magnétique, ils sont accompagnés d'une extinction totale du signal d'horloge CK dans le cas d'une modulation à 100%, due à la disparition de la porteuse. Un mode de réalisation avantageux de l'invention consiste à prévoir une remise à zéro du compteur CMPT et un arrêt forcé de l'horloge CK après chaque front descendant, quelle que soit la profondeur de modulation de l'amplitude du champ magnétique. De cette manière, on ne fait pas la distinction entre une modulation à 10% et une modulation à 100% et le circuit FIC présente un fonctionnement constant et homogène quelle que soit la profondeur de modulation. Cette caractéristique est obtenue simplement dans le mode de réalisation de la figure 4 en appliquant sur une troisième entrée de la porte A1 le signal FED. Les impulsions du signal FED étant d'une durée de 1 etu, elles remettent à zéro le compteur CMPT et l'inhibent pour une durée de 1 etu. Cette durée de 1 etu est la durée des impulsions du signal FED, et correspond à la durée des trous de champ de manière à ne pas faire de distinction entre une modulation à 100% et une modulation à 10%. Les valeurs VAL1, VAL2 et VALC sont donc déterminées de manière à prendre en compte l'arrêt du compteur pendant 1 etu après chaque front descendant, une valeur de 1 etu devant être déduite des temps T1, T2 et Tch afin de prendre en compte l'arrêt du signal d'horloge.

Les trous de champ selon la norme ISO/IEC 14443-B correspondant à une modulation à 10% de l'amplitude du champ magnétique, ils n'entraînent pas l'extinction du signal d'horloge. Toutefois, il est avantageux de remettre à zéro le compteur et de l'inhiber au moyen du signal FED pour une durée de 1 etu lors de la détection du premier front descendant, car on ne sait pas si ce premier front descendant correspond à un début de trame SOF1 ou SOF2. En outre, le comptage des temps T3 et T4 obéit alors aux même règles que le comptage des temps T1, T2 et Tch, une valeur de 1 etu devant être déduite des temps T3 et T4 afin de prendre en compte l'arrêt du signal d'horloge.

En revenant à la figure 3, la détection par l'unité de décodage DEC20 d'un passage à 1 du signal SOFD1 déclenche dans celle-ci un processus classique de décodage des bits de données qui suivent le début de trame. De même, la détection par l'unité de décodage DEC21 d'un passage à 1 du signal SOFD2 déclenche dans celle-ci un processus classique de décodage des bits de données qui suivent le début de trame, à commencer par un bit de start.

Par ailleurs, on a vu dans ce qui précède que le signal SEL qui pilote l'entrée de sélection du multiplexeur MUX est égal au signal SOFD2. Ainsi, le multiplexeur sélectionne par défaut la sortie de l'unité de décodage DEC20, indépendamment de la valeur du signal SOFD1, et ne sélectionne la sortie de l'unité de décodage DEC21 que si le signal SOFD2 passe à 1.

Dans une variante de réalisation, le multiplexeur pourrait également être contrôlé par un signal SEL égal au signal SOFD1.

Par ailleurs, le passage à 1 du signal SOFD1 peut être utilisé pour mettre hors tension l'unité de décodage DEC2 et, réciproquement, le passage à 1 du signal SOFD2 peut être utilisé pour mettre hors tension l'unité de décodage DEC1. Dans ce cas, la prévision du multiplexeur peut n'être pas nécessaire, en connectant matériellement les sorties des deux unités de décodage DEC20, DEC21 et en s'assurant que la sortie de chaque unité de décodage est dans un état haute impédance lorsque l'unité de décodage est désactivée.

Ainsi, la sélection selon l'invention d'une unité de décodage peut consister aussi bien dans le fait d'assurer un multiplexage des sorties des unités de décodage au moyen d'un multiplexeur ou d'interrupteurs agencés sur ces sorties, et/ou dans le fait de désactiver l'unité correspondante, ces opérations pouvant être combinées, et/ou dans le fait de prévoir une connexion matérielle des sorties des unités de décodage accompagnée d'une mise à haute impédance de l'une des sorties.

Une variante de réalisation DECC3 du circuit de décodage selon l'invention est illustrée en figure 7. Dans ce mode de réalisation le circuit FIC est supprimé en tant que circuit indépendant partagé par les unités de décodage, et le circuit de décodage ne comprend que deux unités de décodage DEC30, DEC31 et le multiplexeur MUX. Chaque unité de décodage assure elle-même la détection du profil de trame correspondant au protocole qui lui est attribué, l'unité DEC30 assurant par exemple la détection du profil SOF1 et la délivrance du signal SOFD1, l'unité DEC31 assurant la détection du profil SOF2 et la délivrance du signal SOFD2. Comme précédemment, le signal SOFD2 est utilisé ici pour piloter le multiplexeur MUX mais le signal SOFD1 pourrait également être utilisé à cet effet.

Un tel mode de réalisation implique un éclatement du circuit FIC décrit ci-dessus, en deux parties agencées respectivement dans l'unité DEC30 et dans l'unité DEC31. En référence à la figure 4, la partie agencée dans l'unité DEC30 comprend par exemple un premier compteur CMPT et les éléments BT1, LT1, O1, O2, A1, D1 et D2, tandis que la partie agencée dans l'unité DEC31 comprend un deuxième compteur CMPT et les éléments BT2, BT3, A3, A4, O3, D3, LT2 et LT3. Dans ce cas, le signal MODE2 délivré par le verrou LT2 est envoyé à l'unité DEC30.

D'autre part, le signal SOFD1 peut être appliqué à l'unité DEC31 en tant que signal de désactivation (lorsque SOFD1=1) et le signal SOFD2 peut être appliqué à l'unité DEC30 en tant que signal de désactivation (lorsque SOFD2=1). Le multiplexeur MUX est optionnel si une telle désactivation est accompagnée d'une mise à haute impédance des sorties des unités de décodage.

La présente invention est bien entendu susceptible de diverses autres variantes et modes de réalisation. Notamment, on a considéré dans ce qui précède que le circuit intégré IC2 comportait un circuit de codage unique CDC commun aux deux modes de fonctionnement. Cela est le cas en pratique lorsque le circuit intégré met en oeuvre les protocoles ISO/IEC 15693 et ISO/IEC 14443-B, qui prévoient un codage identique pour la transmission de données dans le sens circuit intégré vers lecteur. Toutefois, la présente invention est susceptible de s'appliquer à tout autre type de protocoles et le circuit de codage CDC peut, si nécessaire, comprendre deux unités de codage distinctes, sélectionnées au moyen des signaux SOFD1 et SOFD2.

Il entre également dans le cadre de la présente invention de prévoir un circuit intégré capable d'assurer une communication selon trois protocoles distincts, voire plus.

Enfin, on a considéré dans ce qui précède, dans un souci de simplification, que le circuit extracteur d'horloge CEC1 délivre un signal d'horloge CK ne dépendant pas du mode de fonctionnement du circuit intégré. Il est avantageux en pratique de prévoir un circuit extracteur d'horloge CEC1 à deux modes de fonctionnement, comportant une entrée de sélection du mode de fonctionnement qui est contrôlée par l'un des signaux SOFD1, SOFD2, SEL/SOFD1 (si SEL=SOFD1) ou encore SEL/SOFD2 comme cela est représenté en figures 3 et 7. Dans ce cas, le circuit CEC1 délivre un signal d'horloge CK0 ou un signal d'horloge CK1 selon le mode de fonctionnement du circuit intégré.

A titre d'exemple, le signal d'horloge CK0 est adapté à l'unité de décodage DEC20, DEC30 et est délivré par défaut avant passage à 1 de l'un des signaux SOFD1, SOFD2. Le signal d'horloge CK1 est délivré quand le signal SOFD2 passe à 1, et est adapté à l'autre unité de décodage DEC21, DEC31.

Dans le cadre du mode de réalisation décrit ci-dessus, la fréquence du signal d'horloge CK0 est par exemple de 13,56/32 MHz soit 423 kHz lorsque le circuit intégré fonctionne conformément au protocole ISO/IEC 15693, et est de 13,56/8 MHz soit 1,69 MHz lorsque le circuit intégré fonctionne conformément au protocole ISO/IEC 14443-B.

## Revendications

1. Circuit intégré sans contact (IC2, IC3) comprenant des moyens d'émission/réception de données par couplage inductif, et des moyens (DECC2, DECC3) pour assurer une communication selon au moins deux protocoles déterminés comprenant chacun l'émission, au commencement d'une communication, d'un début de trame présentant un profil déterminé invariable indépendant des données à transmettre,
**caractérisé en ce qu'**il comprend des moyens (FIC, SOFD1, SOFD2) pour basculer automatiquement dans un mode de communication conforme à l'un ou l'autre des protocoles, en fonction du profil du début de trame (SOF1, SOF2) reçu au commencement d'une communication.

2. Circuit intégré sans contact (IC2, IC3) selon la revendication 1, comprenant :
- une première unité de décodage (DEC20, DEC30) pour décoder des données codées selon un premier protocole,
- au moins une seconde unité de décodage (DEC21, DEC31) pour décoder des données codées selon au moins un second protocole, et
- des moyens (FIC, SOFD1, SOFD2, MUX) de sélection de la première ou de la seconde unité de décodage en fonction du profil du début de trame (SOF1, SOF2) reçu au commencement d'une communication.

3. Circuit intégré sans contact (IC2, IC3) selon la revendication 2, comprenant :
- des moyens (DEMC, FED, RED, CMPT, BT1, LT1, A2, 02, D1, D2) de détection d'un début de trame d'un premier type (SOF1) correspondant au premier protocole, agencés pour délivrer un premier signal de détection de début de trame (SOFD1) lorsqu'un début de trame du premier type est détecté, et
- des moyens (DEMC, FED, RED, CMPT, BT3, 03, A4, LT3) de détection d'un début de trame d'un second type (SOF2) correspondant au second protocole, agencés pour délivrer un second signal de détection de début de trame (SOFD2) lorsqu'un début de trame du second type est détecté.

4. Circuit intégré sans contact (IC2, IC3) selon la revendication 3, dans lequel :
- les moyens de détection d'un début de trame du premier type sont agencés pour détecter un premier front de variation (FED1) du signal reçu par couplage inductif, puis détecter dans une première fenêtre temporelle (T1-T2, W1) un second front de variation (FED2) du signal reçu par couplage inductif, et
- les moyens de détection d'un début de trame du second type sont agencés pour détecter un premier front de variation (FED1) du signal reçu par couplage inductif, puis détecter dans une seconde fenêtre temporelle (T3-T4) un second front de variation du (RED1) du signal reçu par couplage inductif.

5. Circuit intégré sans contact (IC2, IC3) selon la revendication 4, dans lequel :
- les moyens de détection d'un début de trame du premier type sont agencés pour détecter deux fronts de variation (FED1, FED2) d'un même type, et
- les moyens de détection d'un début de trame du second type sont agencés pour détecter un front de variation d'un premier type (FED1) et un front de variation (RED1) d'un second type inverse du premier type.

6. Circuit intégré sans contact (IC2, IC3) selon l'une des revendications 4 et 5, comprenant des moyens (CMPT, BT2, A3, D3, LT2, MODE2, O1, LT1) pour inhiber les moyens de détection d'un début de trame du premier type, lorsqu'un temps déterminé (Tch) se situant entre la première et la seconde fenêtres temporelles s'est écoulé après apparition d'un premier front de variation (FED1) du signal reçu par couplage inductif.

7. Circuit intégré sans contact (IC2, IC3) selon l'une des revendications 3 à 6, comprenant des moyens (I2, A3) pour inhiber les moyens de détection d'un début de trame du second type lorsqu'un début de trame du premier type est détecté.

8. Circuit intégré sans contact (IC2) selon l'une des revendications 3 à 7, comprenant un circuit d'identification de début de trame (FIC) commun aux première et seconde unités de décodage (DEC20, DEC21), dans lequel sont agencés les moyens de détection d'un début de trame du premier type et les moyens de détection d'un début de trame du second type.

9. Circuit intégré sans contact (IC3) selon l'une des revendications 3 à 7, dans lequel :
- la première unité de décodage (DEC30) comprend les moyens pour détecter un début de trame du premier type, et
- la seconde unité de décodage (DEC31) comprend les moyens pour détecter un début de trame d'un second type.

10. Circuit intégré sans contact (IC2, IC3) selon l'une des revendications 2 à 9, dans lequel les moyens de sélection comprennent des moyens (SOFD1, SOFD2) de désactivation de la seconde unité de décodage (DEC21, DEC31) ou de désactivation de la première unité de décodage (DEC20, DEC30).

11. Circuit intégré sans contact (IC2, IC3) selon l'une des revendications 2 à 10, dans lequel les moyens de sélection comprennent un moyen de multiplexage (MUX) des sorties des unités de décodage (DEC20, DEC21, DEC30, DEC31).

12. Circuit intégré sans contact (IC2, IC3) selon la revendication 11, dans lequel le moyen de multiplexage est agencé pour sélectionner par défaut la sortie de la première unité de décodage (DEC20, DEC30) et pour sélectionner la sortie de la seconde unité de décodage (DEC21, DEC31) lorsqu'un début de trame (SOFD2) correspondant au protocole de la deuxième unité de décodage est reçu.

13. Circuit intégré sans contact (IC2, IC3) selon l'une des revendications 11 et 12, dans lequel le moyen de multiplexage comprend une entrée de sélection pilotée par un signal de détection de début de trame (SEL, SOFD1, SOFD2).

14. Circuit intégré sans contact (IC2, IC3) selon l'une des revendications précédentes, comprenant un circuit extracteur d'horloge (CEC2) agencé pour délivrer un premier signal d'horloge (CK0) de fréquence déterminée lorsque le circuit intégré est dans un mode de communication conforme à un premier protocole, et délivrer un second signal d'horloge (CK1) d'une fréquence différente de celle du premier signal d'horloge, lorsque le circuit intégré est dans un mode de communication conforme à un second protocole.

15. Circuit intégré sans contact (IC2, IC3) selon l'une des revendications précédentes, comprenant des moyens de communication selon au moins le protocole ISO/IEC 15693 et le protocole ISO/IEC 14443-B, et des moyens pour basculer automatiquement dans un mode de communication conforme à l'un ou l'autre de ces protocoles en fonction du profil d'un début de trame reçu au commencement d'une communication.

## Patentansprüche

1. Kontaktfreie integrierte Schaltung (IC2, IC3), umfassend Mittel zum Senden/Empfangen von Daten durch Induktionskopplung, und Mittel (DECC2, DECC3), um eine Kommunikation mindestens zwei bestimmten Protokollen entsprechend zu gewährleisten, die jedes das Senden, zu Beginn einer Kommunikation, eines Rahmenanfangs einschließen, der ein vorgegebenes, unveränderliches Profil aufweist, das unabhängig von den zu übertragenden Daten ist,
**dadurch gekennzeichnet, daß** sie Mittel (FIC, SOFD1, SOFD2) umfaßt, um abhängig vom Profil des Rahmenanfangs (SOF1, SOF2), der zu Beginn einer Kommunikation empfangen wird, automatisch in einen Kommunikationsmodus umzuschalten, der dem einen oder dem anderen der Protokolle entspricht.

2. Kontaktfreie integrierte Schaltung (IC2, IC3) nach Anspruch 1, umfassend:
- eine erste Decodiereinheit (DEC20, DEC30) zum Decodieren der Daten, die einem ersten Protokoll entsprechend codiert wurden,
- mindestens eine zweite Decodiereinheit (DEC21, DEC31) zum Decodieren der Daten, die mindestens einem zweiten Protokoll entsprechend codiert wurden, und
- Mittel (FIC, SOFD1, SOFD2, MUX), um abhängig vom Profil des Rahmenanfangs (SOF1, SOF2), das zu Beginn einer Kommunikation empfangen wird, die erste oder die zweite Decodiereinheit zu wählen.

3. Kontaktfreie integrierte Schaltung (IC2, IC3) nach Anspruch 2, umfassend:
- Mittel (DEMC, FED, RED, CMPT, BT1, LT1, A2, 02, D1, D2) zum Erkennen eines Rahmenanfangs eines ersten Typs (SOF1), der dem ersten Protokoll entspricht, welche angeordnet sind, um ein erstes Rahmenanfangserkennungssignal (SOFD1) auszugeben, wenn ein Rahmenanfang des ersten Typs erkannt wird, und
- Mittel (DEMC, FED, RED, CMPT, BT3, 03, A4, LT3) zum Erkennen eines Rahmenanfangs eines zweiten Typs (SOF2), der dem zweiten Protokoll entspricht, welche angeordnet sind, um ein zweites Rahmenanfangserkennungssignal (SOFD2) auszugeben, wenn ein Rahmenanfang des zweiten Typs erkannt wird.

4. Kontaktfreie integrierte Schaltung (IC2, IC3) nach Anspruch 3, wobei:
- die Mittel zum Erkennen eines Rahmenanfangs des ersten Typs angeordnet sind, um eine erste Änderungsfront (FED1) des durch Induktionskopplung empfangenen Signals zu erkennen, dann in einem ersten Zeitfenster (T1-T2, W1) eine zweite Änderungsfront (FED2) des durch Induktionskopplung empfangenen Signals zu erkennen, und
- die Mittel zum Erkennen eines Rahmenanfangs des zweiten Typs angeordnet sind, um eine erste Änderungsfront (FED1) des durch Induktionskopplung empfangenen Signals zu erkennen, dann in einem zweiten Zeitfenster (T3-T4) eine zweite Änderungsfront (RED1) des durch Induktionskopplung empfangenen Signals zu erkennen.

5. Kontaktfreie integrierte Schaltung (IC2, IC3) nach Anspruch 4, wobei:
- die Mittel zum Erkennen eines Rahmenanfangs des ersten Typs angeordnet sind, um zwei Änderungsfronten (FED1, FED2) eines gleichen Typs zu erkennen, und
- die Mittel zum Erkennen eines Rahmenanfangs des zweiten Typs angeordnet sind, um eine Änderungsfront eines ersten Typs (FED1) und eine Änderungsfront (RED1) eines zweiten Typs zu erkennen, der gegenüber dem ersten Typ invertiert ist.

6. Kontaktfreie integrierte Schaltung (IC2, IC3) nach einem der Ansprüche 4 und 5, umfassend Mittel (CMPT, BT2, A3, D3, LT2, MODE2, O1, LT1), um die Mittel zum Erkennen eines Rahmenanfangs des ersten Typs zu sperren, wenn nach Auftreten einer ersten Änderungsfront (FED1) des durch Induktionskopplung empfangenen Signals eine vorgegebene Zeit (Tch), die zwischen dem ersten und dem zweiten Zeitfenster liegt, abgelaufen ist.

7. Kontaktfreie integrierte Schaltung (IC2, IC3) nach einem der Ansprüche 3 bis 6, umfassend Mittel (I2, A3), um die Mittel zum Erkennen eines Rahmenanfangs des zweiten Typs zu sperren, wenn ein Rahmenanfang des ersten Typs erkannt wird.

8. Kontaktfreie integrierte Schaltung (IC2) nach einem der Ansprüche 3 bis 7, umfassend eine Schaltung zur Identifikation des Rahmenanfangs (FIC), die der ersten und zweiten Decodiereinheit (DEC20, DEC21) gemeinsam ist,.in welcher die Mittel zum Erkennen eines Rahmenanfangs des ersten Typs und die Mittel zum Erkennen eines Rahmenanfangs des zweiten Typs angeordnet sind.

9. Kontaktfreie integrierte Schaltung (IC3) nach einem der Ansprüche 3 bis 7, wobei:
- die erste Decodiereinheit (DEC30) die Mittel zum Erkennen eines Rahmenanfangs des ersten Typs umfaßt, und
- die zweite Decodiereinheit (DEC31) die Mittel zum Erkennen eines Rahmenanfangs eines zweiten Typs umfaßt.

10. Kontaktfreie integrierte Schaltung (IC2, IC3) nach einem der Ansprüche 2 bis 9, wobei die Wählmittel Mittel (SOFD1, SOFD2) zum Deaktivieren der zweiten Decodiereinheit (DEC21, DEC31) oder zum Deaktivieren der ersten Decodiereinheit (DEC20, DEC30) umfassen.

11. Kontaktfreie integrierte Schaltung (IC2, IC3) nach einem der Ansprüche 2 bis 10, wobei die Wählmittel ein Mittel zur Multiplexierung (MUX) der Ausgänge der Decodiereinheiten (DEC20, DEC21, DEC30, DEC31) umfassen.

12. Kontaktfreie integrierte Schaltung (IC2, IC3) nach Anspruch 11, wobei das Multiplexierungsmittel angeordnet ist, um standardmäßig den Ausgang der ersten Decodiereinheit (DEC20, DEC30) zu wählen, und um den Ausgang der zweiten Decodiereinheit (DEC21, DEC31) zu wählen, wenn ein Rahmenanfang (SOFD2) empfangen wird, der dem Protokoll der zweiten Decodiereinheit entspricht.

13. Kontaktfreie integrierte Schaltung (IC2, IC3) nach einem der Ansprüche 11 und 12, wobei das Multiplexierungsmittel einen Wähleingang umfaßt, der von einem Rahmenanfangserkennungssignal (SEL, SOFD1, SOFD2) gesteuert wird.

14. Kontaktfreie integrierte Schaltung (IC2, IC3) nach einem der obigen Ansprüche, umfassend eine Taktableitungsschaltung (CEC2), die angeordnet ist, um ein erstes Taktsignal (CK0) mit vorgegebener Frequenz auszugeben, wenn die integrierte Schaltung sich in einem Kommunikationsmodus befindet, der einem ersten Protokoll entspricht, und ein zweites Taktsignal (CK1) mit einer Frequenz auszugeben, die von der des ersten Taktsignals abweicht, wenn die integrierte Schaltung sich in einem Kommunikationsmodus befindet, der einem zweiten Protokoll entspricht.

15. Kontaktfreie integrierte Schaltung (IC2, IC3) nach einem der obigen Ansprüche, umfassend Kommunikationsmittel mindestens nach dem Protokoll ISO/IEC 15693 und dem Protokoll ISO/IEC 14443-B, und Mittel, um abhängig vom Profil eines Rahmenanfangs, der zu Beginn einer Kommunikation empfangen wird, automatisch in einen Kommunikationsmodus umzuschalten, der dem einen oder dem anderen der Protokolle entspricht.

## Claims

1. Contactless integrated circuit (IC2, IC3) comprising means for sending/receiving data by inductive coupling, and means (DECC2, DECC3) for providing a communication according to at least two determined protocols each comprising sending, at the beginning of a communication, a start of frame having a determined invariable profile independent of the data to be sent,
**characterised in that** it comprises means (FIC, SOFD1, SOFD2) for automatically switching into a communication mode conforming to one or other of the protocols, depending on the profile of the start of frame (SOF1, SOF2) received at the beginning of a communication.

2. Contactless integrated circuit (IC2, IC3) according to claim 1, comprising:
- a first decoding unit (DEC20, DEC30) for decoding data coded according to a first protocol,
- at least a second decoding unit (DEC21, DEC31) for decoding data coded according to at least a second protocol, and
- means (FIC, SOFD1, SOFD2, MUX) for selecting the first or the second decoding unit depending on the profile of the start of frame (SOF1, SOF2) received at the beginning of a communication.

3. Contactless integrated circuit (IC2, IC3) according to claim 2, comprising:
- means (DEMC, FED, RED, CMPT, BT1, LT1, A2, 02, D1, D2) for detecting a start of frame of a first type (SOF1) corresponding to the first protocol, arranged for delivering a first start of frame detection signal (SOFD1) when a start of frame of the first type is detected, and
- means (DEMC, FED, RED, CMPT, BT3, 03, A4, LT3) for detecting a start of frame of a second type (SOF2) corresponding to the second protocol, arranged for delivering a second start of frame detection signal (SOFD2) when a start of frame of the second type is detected.

4. Contactless integrated circuit (IC2, IC3) according to claim 3, wherein:
- the means for detecting a start of frame of the first type are arranged for detecting a first variation edge (FED1) of the signal received by inductive coupling, then detecting in a first time window (T1-T2, W1) a second variation edge (FED2) of the signal received by inductive coupling, and
- the means for detecting a start of frame of the second type are arranged for detecting a first variation edge (FED1) of the signal received by inductive coupling, then detecting in a second time window (T3-T4) a second variation edge (RED1) of the signal received by inductive coupling.

5. Contactless integrated circuit (IC2, IC3) according to claim 4, wherein:
- the means for detecting a start of frame of the first type are arranged for detecting two variation edges (FED1, FED2) of a same type, and
- the means for detecting a start of frame of the second type are arranged for detecting a variation edge of a first type (FED1) and a variation edge (RED1) of a second type that is the opposite of the first type.

6. Contactless integrated circuit (IC2, IC3) according to one of claims 4 and 5, comprising means (CMPT, BT2, A3, D3, LT2, MODE2, O1, LT1) for inhibiting the means for detecting a start of frame of the first type, when a determined time (Tch) situated between the first and the second time windows has elapsed after appearance of a first variation edge (FED1) of the signal received by inductive coupling.

7. Contactless integrated circuit (IC2, IC3) according to one of claims 3 to 6, comprising means (I2, A3) for inhibiting the means for detecting a start of frame of the second type when a start of frame of the first type is detected.

8. Contactless integrated circuit (IC2) according to one of claims 3 to 7, comprising a start of frame identification circuit (FIC) common to the first and second decoding units (DEC20, DEC21), wherein the means for detecting a start of frame of the first type and the means for detecting a start of frame of the second type are arranged.

9. Contactless integrated circuit (IC3) according to one of claims 3 to 7, wherein:
- the first decoding unit (DEC30) comprises the means for detecting a start of frame of the first type, and
- the second decoding unit (DEC31) comprises the means for detecting a start of frame of the second type.

10. Contactless integrated circuit (IC2, IC3) according to one of claims 2 to 9, wherein the selection means comprise means (SOFD1, SOFD2) for deactivating the second decoding unit (DEC21, DEC31) or for deactivating the first decoding unit (DEC20, DEC30).

11. Contactless integrated circuit (IC2, IC3) according to one of claims 2 to 10, wherein the selection means comprise a means for multiplexing (MUX) the outputs of the decoding units (DEC20, DEC21, DEC30, DEC31).

12. Contactless integrated circuit (IC2, IC3) according to claim 11, wherein the multiplexing means is arranged for selecting by default the output of the first decoding unit (DEC20, DEC30) and for selecting the output of the second decoding unit (DEC21, DEC31) when a start of frame (SOFD2) corresponding to the protocol of the second decoding unit is received.

13. Contactless integrated circuit (IC2, IC3) according to one of claims 11 and 12, wherein the multiplexing means comprises a selection input driven by a start of frame detection signal (SEL, SOFD1, SOFD2).

14. Contactless integrated circuit (IC2, IC3) according to one of the preceding claims, comprising a clock extractor circuit (CEC2) arranged for delivering a first clock signal (CK0) of determined frequency when the integrated circuit is in a communication mode conforming to a first protocol, and delivering a second clock signal (CK1) of a different frequency from that of the first clock signal, when the integrated circuit is in a communication mode conforming to a second protocol.

15. Contactless integrated circuit (IC2, IC3) according to one of the preceding claims, comprising means for communicating according to at least the ISO/IEC 15693 protocol and the ISO/IEC 14443-B protocol, and means for automatically switching into a communication mode conforming to one or other of these protocols depending on the profile of a start of frame received at the beginning of a communication.
